Europäisches Patentamt

(19) European Patent Office

Office européen des brevets

(11) Veröffentlichungsnummer: **0 263 805 B1**

(12) **EUROPÄISCHE PATENTSCHRIFT**

(45) Veröffentlichungstag der Patentschrift:
27.03.91 Patentblatt 91/13

(21) Anmeldenummer: 87890074.5

(22) Anmeldetag: 14.04.87

(51) Int. Cl.⁵: **G01N 21/77**, G02B 6/34,
G02B 6/42

(54) Sensorelement zur Bestimmung von Stoffkonzentrationen.

(30) Priorität: 10.10.86 AT 2706/86

(43) Veröffentlichungstag der Anmeldung:
13.04.88 Patentblatt 88/15

(45) Bekanntmachung des Hinweises auf die
Patenterteilung:
27.03.91 Patentblatt 91/13

(84) Benannte Vertragsstaaten:
CH DE FR GB LI

(56) Entgegenhaltungen:
WO-A-85/05447
WO-A-86/07149
DE-A- 3 119 570
DE-A- 3 429 562
US-A- 3 991 460
THIN SOLID FILMS, Band 126, Nr. 3/4, April
1985, Seiten 205-211, Elsevier Sequoia, Lausanne, CH; K. TIEFENTHALER et al.: "Grating
couplers as integrated optical humidity and
gas sensors"

(56) Entgegenhaltungen:
TOPICS IN APPLIED PHYSICS, Band 7, 1980,
Auflage 2, Kapitel 3, Springer Verlag, Berlin,
DE; T. TAMIR: "Integrated optics"
PROCEEDINGS OF THE INTERNATIONAL
MEETING ON CHEMICAL SENSORS, ANALY-
TICAL CHEMISTRY SYMPOSIA SERIES, Band
17, 19.-22. September 1983, Fukuoka, JP.Sei-
ten 496-500, Elsevier, Amsterdam, NL; W.H.
KO et al.: "Multiple isfet with integrated circuits"

(73) Patentinhaber: AVL Medical Instruments AG
Stettemerstrasse 28
CH-8207 Schaffhausen (CH)

(72) Erfinder: Marsoner, Hermann, Dr.Dipl.-Ing.
Roseggersiedlung 2
A-8153 Steinberg (AT)
Erfinder: Karpf, Hellfried, Dr.
Leechgasse 78
A-8010 Graz (AT)
Erfinder: Leitner, Alfred, Dr.
Theodor-Körner-Strasse 151
A-8010 Graz (AT)

(74) Vertreter: Krause, Walter, Dr. Dipl.-Ing. et al
Postfach 200 Singerstrasse 8
A-1010 Wien (AT)

## Beschreibung

Die Erfindung betrifft ein Sensorelement zur Bestimmung von Stoffkonzentrationen in gasförmigen und flüssigen Proben, mit einer Trägerschicht, sowie einer Indikatorschicht mit mindestene einer Indikatorsubstanz, wobei sich mindestens eine optische Eigenschaft der Indikatorsubstanz bei Wechselwirkung mit dem zu messenden Stoff abhängig von dessen Konzentration ändert.

Optische Sensoren zur Messung von Stoffkonzentrationen mit Indikatorsubstanzen, insbesondere solche, die auf Änderung der Fluoreszenzeigenschaften der Indikatorsubstanz durch Wechselwirkung mit dem zu messenden Stoff beruhen, sind seit längerer Zeit Stand der Technik. Aus der DE-PS 25 08 637 ist beispielsweise ein Sensorelement der eingangs genannten Art bekannt, bei welchem eine dünne Schicht der Indikatorlösung auf einem geeigneten Trägermaterial aufgebracht ist, wobei die Indikatorlösung durch eine für den zu messenden Stoff permeable Membran abgedeckt ist. An der Trägerseite dieser Anordnung ist eine aufwendige Beleuchtung- und Lichtmeßeinrichtung mit einer Reihe optischer Elemente, sowohl im Weg der Anregungsstrahlung als auch der Fluoreszenzstrahlung angeordnet.

In einer aus der DD-PS 106 086 bekannten Anordnung befindet sich der Fluoreszenzindikator in einer über eine Meß- und eine Referenzmeßkammer reichenden Schicht, wobei diese Indikatorschicht jedoch im Bereich der Referenzmeßkammer gegenüber den zu untersuchenden Medium abgedeckt ist. Aus der Differenz der Fluoreszenzintensität bezüglich der Meß- und der Referenzmeßkammer wird direkt auf die Konzentration des zu messenden Stoffes geschlossen. Das Fluoreszenzlicht aus den beiden Meßkammern wird hier mit Hilfe von Fiber-Lichtleitern je einem fotoelektrischen Wandler zugeleitet. Andere Beispiele von Sensoren sind in DE-A-3429562 und WO-A-85/05447 enthalten.

Die genannten Sensoren bestehen somit in der Regel aus einem Reaktionsraum, der in Form einer dünnen Schicht ausgebildet sein kann, in der sich in einer bestimmten geometrischen Anordnung die Indikatorsubstanz befindet. Von einer der Probe abgewandten Seite her wird durch eine Lichtquelle und geeignete optische Einrichtungen, wie z.B. Lichtleiter oder Lichtfasern, Licht einer bestimmten Wellenlänge der Indikatorschicht zugeführt. Das von der Indikatorschicht diffus reflektierte bzw. nach allen Seiten ausgesandte Fluoreszenzlicht, wird meist von der selben Seite des Reaktionsraumes bzw. der Indikatorschicht wiederum mit Hilfe geeigneter optischer Mitteln und entsprechender Filtereinrichtungen einem Fotodetektor zugeführt. Die der optischen Einrichtungen abgewandte Seite des Reaktionsraumes wird mit der gasförmigen oder flüssigen Probe in Kontakt gebracht, wobei die zu messende Substanz in der Regel durch Diffusion in den Reaktionsraum gelangen kann und mit den Indikatormolekülen der Indikatorsubstanz eine Wechselwirkung eingeht, die deren optischen Eigenschaften, insbesondere die Absorptions- bzw. Fluoreszenzeigenschaften abhängig von der Stoffkonzentration ändert. Der Grad und der Charakter dieser Änderung steht mit der zu messenden Teilchenkonzentration in einem funktionalen Zusammenhang.

Die Größe derartiger Anordnungen wird einerseits durch die Größe des Sensors selbst und andererseits durch die Geometrie und die Größe der optischen Einrichtungen, welche insbesondere für die Abfuhr der Fluoreszenz- oder Reflexionsstrahlung notwendig sind, bestimmt.

Es stellt sich somit bei derartigen Sensoren, beispielsweise bei der Verwendung in Mikroanalysengeräten, die Aufgabe, diese extrem zu verkleinern, sowie einfach herstellen zu können, wobei zusätzlich das Problem auftritt, daß das Anregungslicht bei herkömmlichen Sensoren schlecht ausgenützt wird, da der Großteil der Anregungsstrahlung die Sensorschicht passiert, ohne mit den Indikatorsubstanzen in Wechselwirkung zu treten.

Die der Erfindung zugrundeliegende Aufgabe wird erfindungsgemäß dadurch gelöst, daß auf der Trägerschicht in planarer Anordnung mindestens ein fotoempfindliches Element und dessen elektrische Kontaktierung vorliegt, daß die die Indikatorsubstanz beinhaltende Indikatorschicht einen Wellenleiter für die Anregungsstrahlung darstellt, wobei die Anregungsstrahlung mittels eines optischen Elementes in die Indikatorschicht einkoppelbar ist, sowie daß die von der Anregungsstrahlung angeregte Indikatorsubstanz mit dem bzw. den fotoempfindlichen Element(en) in optischem Kontakt steht. Alle Schichten des Sensors, ggf. einschließlich der Indikatorschicht, werden dabei durch übliche mikroelektronische Techniken, wie Aufdampfen, Sputtern, Aufspinnen u.s.w. hergestellt, wobei durch die Integration der fotoempfindlichen Elemente und deren elektrischen Kontaktierung direkt auf der Trägerschicht, oder in einem eigenen als Dünnschicht vorliegenden Substrat des Sensorelementes, die geforderte extreme Miniaturisierung der gesamten Sensorik erreicht werden. Es erfolgt somit in vorteilhafter Weise die Erfassung der zu messenden Fluoreszenz- oder Reflexionsstrahlung bereits im Sensorelement selbst, wodurch alle früher notwendigen optischen Einrichtungen zur Lichtmessung außerhalb des Sensorelementes wegfallen. Die Meßsignale werden über entsprechende elektrische Leitungen direkt einer Anzeige- oder Auswerteelektronik zugeleitet.

Vorteilhafterweise wird erfindungsgemäß die Sensorschicht gleichzeitig als Wellenleiter für die Anregungsstrahlung verwendet. Das Anregungslicht durchstrahlt diese nicht normal zur Grenzschicht, wie bei herkömmlichen Sensoren, sondern parallel zur Oberfläche der extrem dünnen Sensorschicht, womit die Anregungsstrahlung wesentlich besser ausgenützt wird. Die Einkoppelung des Anregungslichtes in die dünne Indikatorschicht erfolt über ein geeignetes optisches Element.

Die elektrische Kontaktierung der optoelektrischen Bauteile des Sensors stellt weiters keine Einschränkung im Sinne der vorliegenden Erfindung dar, denn die entsprechenden Kontaktbahnen können ebenfalls mit bekannten mikroelektronischen Techniken erzeugt werden.

Beim erfindungsgemäßen Sensorelement können verschiedene, für spezielle Aufgaben optimierte Indikatorschichten verwendet, bzw. zumindest einige mittels mikroelektronischer Dünnschichttechniken aufgetragen werden.

In einer Ausgestaltung der Erfindung ist vorgesehen, daß das optische Element ein Einkoppelprisma ist, welches an der als Wellenleiter ausgebildeten Indikatorschicht angebracht ist. Ein Einkoppelprisma ist ein für die anregende Strahlung transparenter Körper, der erst nachträglich an die Wellenleiterschicht angekittet werden muß. Damit ist es möglich, in sehr dünne Wellenleiterschichten größere Lichtmengen einzukoppeln.

Eine andere Ausgestaltung der Erfindung sieht vor, daß das optische Element eine Gitterstruktur (Grating Coupler) ist, welche vorzugsweise an der der Probe abgewandten Seite der als Wellenleiter ausgebildeten Indikatorschicht angebracht ist. Ein Grating Coupler ist als Alternative zum oben genannten Einkoppelprisma vorstellbar, wobei dieser auch in Dünnschichttechnologie herstellbar ist, wodurch die Fertigung dieser Sensorelemente weiter vereinfacht wird.

Eine vorteilhafte Ausgestaltung der Erfindung sieht vor, daß das fotoempfindliche Eelement als kreisringförmige Diode ausgebildet ist, sowie daß die Gitterstruktur im Bereich der inneren Kreisfläche der Diode an der Indikatorschicht vorgesehen ist. Ein derartiges Sensorelement könnte beispielsweise dadurch realisiert werden, daß aus einem Wafer der bereits alle Schichten einer Fotodiode (als fotoempfindliches Element) trägt, eine kreisringförmige Diodenstruktur heraus geätzt wird. Die übrigen Schichten werden dann einschließlich der Gitterstruktur im Bereich der inneren Kreisfläche der Diode durch Sputtern bzw. Spinnen aufgebracht.

Eine weitere erfindungsgemäße Ausführungsform sieht vor, daß im Bereich der Gitterstruktur zumindest zwei gegenüberliegende Fotodioden als fotoempfindliche Elemente befestigt sind. Dabei kann auch eine nichtzirkulare Ausführungsform gewählt werden, wodurch die Gitterstruktur einfacher und billiger herstellbar ist und herkömmliche rechteckige oder quadratische Fotodioden verwendet werden können.

In einer Weiterbildung der Erfindung wird vorgeschlagen, daß das optische Element zumindest indirekt mit dem Ende eines Lichtleiters, insbesondere einer Single-Fibre, in Verbindung steht, wobei ggf. zwischen dem Ende des Lichtleitters und dem optischen Element ein Anregungsfilter vorliegt. Dabei kann beispielsweise bei einem Sensor mit einer kreisringförmigen Diode in den Bereich der inneren Kreisfläche dieser Diode das Ende eines Lichtleiters eingebracht werden. Über die in diesem Bereich vorliegendie Gitterstruktur wird nun das Anregungslicht umgelenkt und in die als Wellenleiter ausgebildete Sensorschicht radial eingekoppelt. Durch entsprechende geometrische Abmessungen des Lichtleiters, beispielsweise einer Single-Fibre und der Dicke der Sensorschicht kann im Zusammenhang mit entsprechend gewählten Brechungsindices für eine optimale Ausnützung des Anregungslichtes gesorgt werden. Es ist natürlich auch möglich, zwischen dem Ende des Lichtleiters und dem optischen Element eine Filterschicht vorzusehen, welches aus der Anregungsstrahlung die für die Anregung günstigste Wellenlänge herausfiltert.

Vorteilhaft für die Ausnützung des Anregungslichtes ist es insbesondere, wenn das Verhältnis der Brechungsindices von Kern und Mantel des Lichtleiters sich nur geringfügig vom Verhältnis der Brechungsindices von Indikatorschicht und Probe unterscheidet.

Eine Weiterführung der der Erfindung zugrundeliegenden Idee führt dazu, daß im Bereich der Gitterstruktur eine lichtemittierende Quelle vorliegt, wobei ggf. zwischen Gitterstruktur und lichtemittieren der Quelle ein Anregungsfilter vorliegt. Durch die zusätzliche Integration der lichtemitierenden Quellen, beispielsweise LEDs wird eine weitere Miniaturisierung der gesamten Sensorik ermöglicht. In vorteilhafter Weise weist dieses Sensorelement dann nur mehr elektrische Anschlüsse auf, da alle optischen Einrichtungen außerhalb des Sensorelementes wegfallen. Dieser Sensor zeichnet sich durch massentechnologisch einfache Herstellbarkeit aus, wobei für das gesamte Sensorelement die aus der Halbleitertechnik bekannten Herstellungsverfahren direkt angewendet werden können.

Zur besseren Selektion der zu messenden Fluoreszenzstrahlung von der Anregungsstrahlung ist es gemäß einer Weiterbildung der Erfindung von Vorteil, wenn die fotoempfindlichen Elemente von einer Filterschicht, insbesondere einem Interferenzfilter, bedeckt sind. Alle verwendeten Anregungs- bzw. Emissionsfilter können ebenfalls mit den bereits genannten, aus der Mikroelektronik bekannten Dünnschichttechnologien hergestellt bzw. aufgebracht werden.

Eine andere Ausgestaltung der Erfindung sieht vor, daß sich zwischen den fotoempfindlichen Elementen und der Indikatorschicht zusätzlich eine transparente Schicht (Channel Plate) befindet, deren Akzeptanzwinkel den Transport von Anregungsstrahlung zu den fotoempfindlichen Elementen verhindert, wobei in einzelnen, bestimmten fotoempfindlichen Elementen zugeordneten Bereichen der Indikatorschicht unterschiedliche Indikatorsubstanzen vorliegen können. Dadurch ist es möglich, mehrere Stoffkonzentrationen in gasförmigen oder flüssigen Proben gleichzeitig zu bestimmen, wenn in einzelnen Bereichen unterschiedliche, auf einzelne Stoffe spezifisch ansprechende Indikatorsubstanzen vorliegen. Die Aufbringung unterschiedlicher Indikatorsubstanzen in nur einige 100 Mikrometer Durchmesser aufweisende Bereiche der Indikatorschicht kann mittels Mikrosiebdruck oder durch Aufdampfen realisiert werden. Dabei werden auf bestimmte Zonen, welche durch eine im Fotoverfahren hergestellte Maske definiert sind, dünne Stoffschichten in Form von Mikrosiebdruck und ähnlichen Verfahren abgeschieden.

Schließlich wird erfindungsgemäß vorgeschlagen, daß die Indikatorschicht in an sich bekannter Weise auf der der Probe zugewandten Seite eine Deckschicht aufweist. Diese Deckschicht kann aus einer dünnen Polymerschicht bestehen, in welche Pigmente eingebracht sind und dafür sorgen, daß das Anregungslicht und das Fluoreszenzlicht nicht in den Probenraum gelangen können, um dort unerwünschte Reflexionen oder Fluoreszenzen zu verursachen. Durch eine geeignete Deckschicht können auch grobmolekulare Bestandteile der Probe, die das Meßergebnis beeinflussen würden, von der Indikatorschicht ferngehalten werden. Wenn für die Deckschicht ein entsprechender Brechungsindex gewählt wird, kann dadurch auch die Lichtleiterfunktion der Indikatorschicht unterstützt werden. Weiters ist es möglich, eine Deckschicht mit einer selektivierenden Wirkung anzubringen, wodurch die zu messenden Stoffe bevorzugt zur Indikatorschicht durchdiffundieren können.

Ein weiterer Vorteil derartiger Mikrosensoren besteht vor allem im Hinblick auf die bereits erwähnten Fertigungsmöglichkeiten durch mikroelektronische Techniken darin, daß auf der Trägerschicht zusätzlich elektronische Schaltkreise mitintegriert sind, welche zur Verstärkung der elektrischen Signale der fotoempfindlichen Elemente und/oder zur Regelung der Helligkeit der von den lichtemittierenden Quellen erzeugten Strahlung dienen. Ein weiterer Schritt zu noch höherer Integration ist schließlich erfindungsgemäß dadurch gegeben, daß auf der Trägerschicht hoch integrierte, elektronische Schaltkreise vorliegen, welche Aufgaben der Signalauswertung übernehmen. So können z.B. einzelnen fotoempfindlichen Elementen mit Filterschichten unterschiedlicher Durchlaßcharakteristik eigene Schaltkreise zugeordnet werden, sodaß eine Mehrwellenlängenanalyse direkt im Sensorelement ermöglicht wird.

Die Erfindung wird im folgenden anhand von Zeichnungen näher erläutert. Es zeigen :

Figur 1 einen Schnitt durch ein Sensorelement nach der Erfindung in schematischer Darstellung,

Figur 2 ein Detail aus Figur 1,

Figur 3 eine vereinfachte Ausführungsform des Sensorelementes nach Figur 1,

Figur 4 eine andere Ausführungsform in Schnittdarstellung,

Figur 5 eine Ausführungsvariante des in Figur 4 dargestellten Sensorelementes,

Figur 6 einen schnitt entlang der Linie VI-VI in Figur 5 und

Figur 7 ein weiteres Ausführungsbeispiel des Sensorelementes.

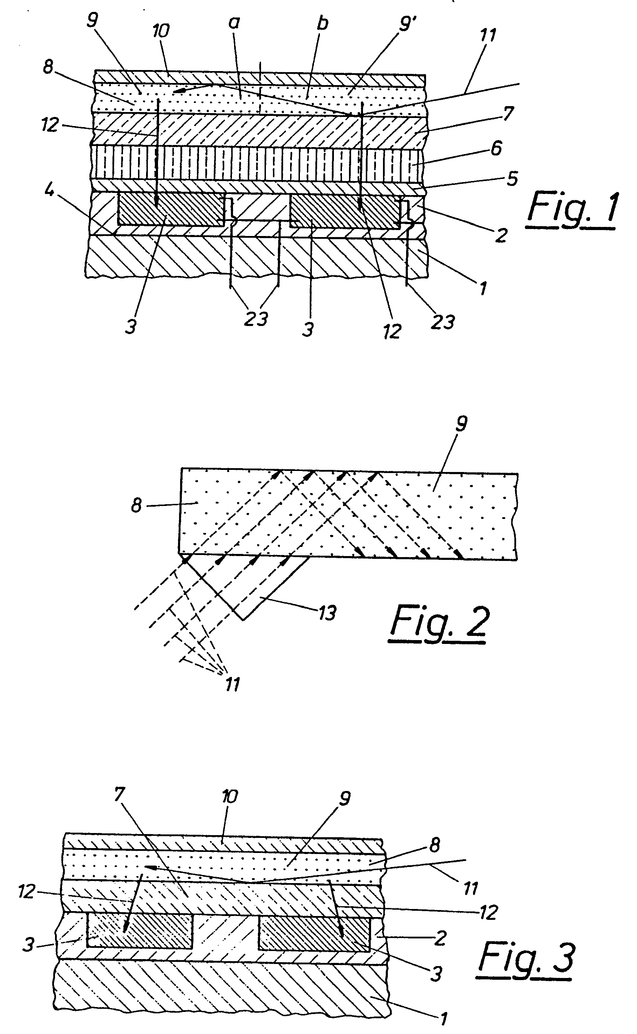

In Figur 1 ist ein erfindungsgemäßes Sensorelement dargestellt, welches auf einer geeigneten Trägerschicht 1 in einem als Dünnschicht ausgeführten Substrat 2 fotoempfindliche Elemente 3 aufweist, die darin parallel zur Oberfläche 4 der Trägerschicht 1 in planarer Anordnung integriert sind. Die fotoempfindlichen Elemente 3 sind von einer optischen Filterschicht 5, insbesondere von einem Interferenzfilter bedeckt, welches durch geeignete mikroelektronische Techniken aufgebracht wird. Es ist jedoch auch möglich, daß die fotoempfindlichen Elemente 3 direkt auf der Trägerschicht 1 vorliegen und von einer Filterschicht ummantelt sind. Auf der Filterschicht 5 befindet sich eine transparente Schicht 6 (Channel Plate), deren Akzeptanzwinkel sehr klein ist, sodaß im wesentlichen nur normal zur Oberfläche dieser transparenten Schicht einfallendes Licht durchgelassen wird. Über dieser transparenten Schicht 6 befindet sich eine Glasschicht 7 mit einem niedrigen Brechungsindex $n_1$, welche als Grenzschicht für die als Wellenleiter ausgebildete Indikatorschicht 8 fungiert. Die Indikatorschicht 8, welche einen Brechungsindex $n_2$ aufweist, wobei $n_2 > n_1$ gilt, enthält eine Indikatorsubstanz 9, wobei durchaus auch mehrere unterschiedliche Indikatorsubstanzen 9, 9' in einzelnen Bereichen a, b der Indikatorschicht, die jeweils einzelnen fotoempfindlichen Elementen 3 zugeordnet sind, vorstellbar sind. Auf der der Probe zugewandten Seite weist das Sensorelement eine Deckschicht 10 auf, deren Brechungsindex $n_3$ wiederum kleiner ist als der Brechungsindex $n_2$ der Indikatorschicht 8. Es ist auch möglich, die Deckschicht 10 wegzulassen, wobei dann das anliegende Probenmedium einen entsprechenden Brechungsindex aufweisen muß, um die Wellenleiterfunktion der Indikatorschicht 8 zu ermöglichen.

Zur Anregung der Indikatorsubstanzen 9, 9' wird die Anregungsstrahlung 11 seitlich in die nur wenige Mikrometer dicke Indikatorschicht 8 eingeleitet, in welcher sie aufgrund des Verhältnisses der Brechungsindices der angrenzenden Glasschicht 7 bzw. der Deckschicht 10 unter Totalreflexion geführt wird und die gesamte Indikatorschicht ausleuchtet. Zur Einkopplung der Anregungsstrahlung 11 in die extrem dünne Indikatorschicht 8 ist – wie aus der Detailzeichnung Figur 2 ersichtlich – ein optisches Element, beispielsweise ein Einkoppelprisma 13, welches erst nachträglich an die Wellenleiterschicht angekittet werden muß, not-wendig. Erst damit ist es möglich, in die sehr dünne Indikatorschicht größere Lichtmengen einzubringen. Die in der Indikatorschicht 8 erzeugte Fluoreszenzstrahlung 12, welche nach allen Richtungen emittiert wird, gelangt über die Glasschicht 7 und die Channel Plate 6, gefiltert durch die Filterschicht 5, in die entsprechenden fotoempfindlichen Elemente 3. Die Channel Plate 6 sorgt dafür, daß einerseits der Transport von Anregungslicht zu den fotoempfindlichen Elementen 3 verhindert wird und andererseits bestimmten Bereichen a, b unterschiedliche fotoempfindliche Elemente 3 zugeordnet werden können.

Da die Channel Plate (transparente Schicht 6) infolge ihres Akzeptanzwinkels eine Trennung zwischen Anregungsstrahlung 11 und Fluoreszenzstrahlung 12 durchführt, kann man in Abänderung der Ausführung nach Figur 1 die die fotoempfindlichen Elemente 3 bedeckende Filterschicht 5 auch weglassen. Streulicht, das infolge von Verunreinigungen oder sonstigen Anisotropien der Indikatorschicht 8 bzw. der diese begrenzenden Schichten auftritt, weist einen konstanten Pegel auf und kann durch eine Referenzmessung kompensiert werden.

Weiters ist es in einer vereinfachten Ausführung nach Figur 3 auch möglich, sowohl auf die Channel Plate als auch auf die die fotoempfindlichen Elemente bedeckende Filterschicht 5 zu verzichten. Die Anregungsstrahlung 11 wird im Lichtwellenleiter, gebildet durch die Glasschicht 7, Indikatorschicht 8 und Deckschicht 10 geleitet und regt die in der Indikatorschicht 8 vorliegende Indikatorsubstanz 9 an. Die Fotodioden erfassen nur die Fluoreszenzstrahlung 12 und Streulicht, das wie oben ausgeführt durch Referenzmessung kompensiert werden kann.

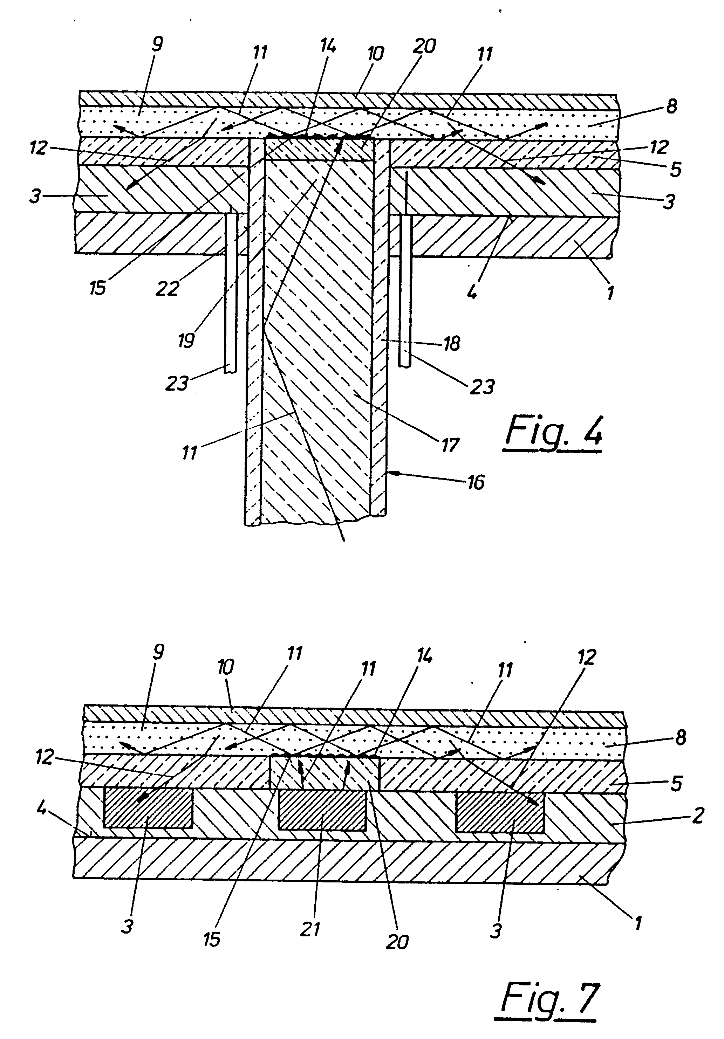

Die elektrische Kontaktierung der fotoempfindlichen Elemente 3, ist in den einzelnen Figuren nicht im Detail dargestellt, da sie mit Hilfe an sich bekannter mikroelektronischer Techniken auf der Trägerschicht 1 bzw. im Substrat 2 integriert ist, lediglich die das Sensorelement durch die Trägerschicht 1 verlassenden elektrischen Kontaktstifte bzw. –drähte 23 sind aus Figur 1 und der noch zu beschreibenden Figur 4 ersichtlich, wobei jedoch im Rahmen der Erfindung die Kontaktstifte bzw. –drähte auch an anderen Stellen des Sensorelementes angeordnet sein können.

In allen übrigen Ausführungsbeispielen sind gleiche Teile mit gleichen Bezugszeichen versehen.

Zur Herstellung eines Sensorelementes nach Figur 4 kann beispielsweise als Ausgangsprodukt ein Wafer verwendet werden, der bereits alle Schichten einer Fotodiode (fotoempdindliches Element 3) trägt. Darauf werden im folgenden durch geeignete mikroelektronische Techniken eine Filterschicht 5, eine Indikatorschicht 8 sowie ggf. eine Deckschicht 10 aufgebracht. Die Filterschicht 5 weist einen kleineren Brechungsindex auf als die Indikatorschicht 8, sodaß sie gleichzeitig als Grenzschicht für die als Wellenleiter ausgebildete Indikatorschicht 8 fungiert. Falls die Deckschicht 10 weggelassen wird, muß wieder – wie schon früher beschrieben – das Probenmedium einen entsprechenden Brechungsindex aufweisen. In einer Aussparung 22 auf der der Probe abgewandten Seite des Sensorelementes, welche bis zur Indikatorschicht 8 reicht, befindet sich das Ende 19 eines Lichtleiters 16, insbesondere einer Single-Fibre. An der der Probe abgewandten Seite 15 der als Wellenleiter ausgebildeten Indikatorschicht 8, befindet sich eine Gitterstruktur (Grating Coupler) 14, welches die durch den Lichtleiter herangeführte Anregungsstrahlung 11 ablenkt und in die Indikator schicht 8 einkoppelt. Das nach allen Seiten emittierte Fluoreszenzlicht 12 gelangt durch die Filterschicht 5 in das fotoempfindliche Element 3 bzw. in die kreisringförmige Fotodiode, welche Kontaktstifte bzw. –drähte 23 aufweist. Besonders günstige Anregungsverhältnisse werden dann geschaffen, wenn das Verhältnis der Brechungsindices von Kern 17 und Mantel 18 des Lichtleiters 16 sich nur geringfügig vom Verhältnis der Brechungsindices von Indikatorschicht 8 und Deckschicht 10 bzw. der Probe unterscheidet. Es ist natürlich auch möglich, zwischen dem Ende 19 des Lichtleiters 16 und der Gitterstruktur 14 ein Anregungsfilter 20 vorzusehen.

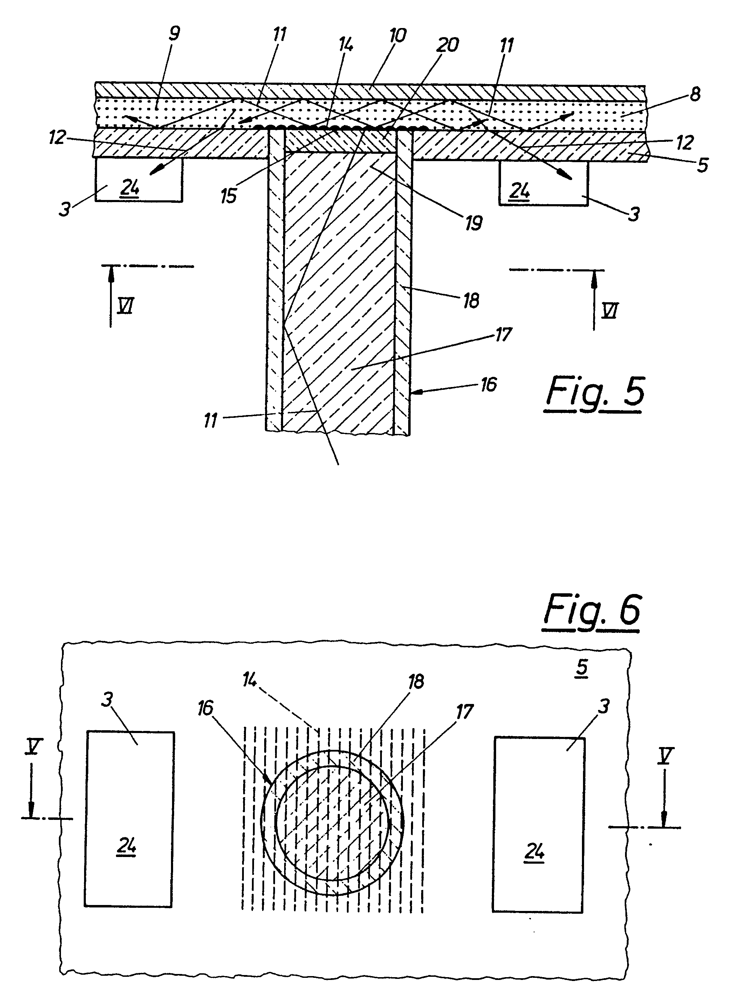

Wie in den Figuren 5 und 6 dargestellt, kann die Anordnung von Grating Coupler und fotoempfindlichen Elementen 3 auch rechteckig oder quadratisch sein, wodurch die Gitterstruktur 14 einfacher und billiger herstellbar ist. Als fotoempfindliche Elemente 3 können handelsübliche rechteckige oder quadratische Fotodioden 24 verwendet werden, die direkt an der Filterschicht 5 befestigt sind.

Figur 7 zeigt eine Variante des in Figur 4 dargestellten Sensorelementes, die sich lediglich dadurch unterscheidet, daß im Bereich der Gitterstruktur 14 eine lichtemittierende Quelle 21 vorliegt, wobei alle optoelektrischen Bauelemente einschließlich deren Kontaktierung in einem Substrat 2 integriert sind. Elektrische Zuleitungen zu der lichtemittierenden Quelle, beispielsweise eine LED, bzw. Ableitungen von den Dioden sind hier nicht dargestellt.

## Ansprüche

1. Sensorelement zur Bestimmung von Stoffkonzentrationen in gasförmigen und flüssigen Proben, mit einer Trägerschicht, sowie einer Indikatorschicht mit mindestens einer Indikatorsubstanz, wobei sich mindestens eine optische Eigenschaft der Indikatorsubstanz bei Wechselwirkung mit dem zu messenden Stoff abhängig von dessen Konzentration ändert, **dadurch gekennzeichnet,** daß auf der Trägerschicht (1) in planarer Anordnung mindestens ein fotoempfindliches Element (3) und dessen elektrische Kontaktierung vorliegt, daß die die Indikatorsubstanz (9, 9') beinhaltende Indikatorschicht (8) einen Wellenleiter für die Anregungsstrahlung (11) darstellt, wobei die Anregungsstrahlung mittels eines optischen Elementes (13, 14) in die Indikatorschicht (8) einkoppelbar ist, sowie daß die von der Anregungsstrahlung (11) angeregte Indikatorsubstanz (9, 9') mit dem bzw. den fotoempfindlichen Element(en) (3) in optischem Kontakt steht.

2. Sensorelement nach Anspruch 1, dadurch gekennzeichnet, daß das optische Element ein Einkoppelprisma (13) ist, welches an der als Wellenleiter ausgebildeten Indikatorschicht (8) angebracht ist (Fig. 2).

3. Sensorelement nach Anspruch 1, dadurch gekennzeichnet, daß das optische Element eine Gitterstruktur, d.h. ein Grating Coupler, (14) ist, welche vorzugsweise an der der Probe abgewandten Seite (15) der als Wellenleiter ausgebildeten Indikatorschicht (8) angebracht ist.

4. Sensorelement nach Anspruch 3, dadurch gekennzeichnet, daß das fotoempfindliche Element (3) als kreisringförmige Diode ausgebildet ist, sowie daß die Gitterstruktur (14) im Bereich der inneren Kreisfläche der Diode an der Indikatorschicht (8) vorgesehen ist (Fig. 4).

5. Sensorelement nach Anspruch 3, dadurch gekennzeichnet, daß im Bereich der Gitterstruktur (14) zumindest zwei gegenüberliegende Fotodioden (27) als fotoempfindliche Elemente (3) befestigt sind.

6. Sensorelement nach einem der Ansprüche 2 bis 5, dadurch gekennzeichnet, daß das optische Element (13, 14) zumindest indirekt mit dem Ende (19) eines Lichtleiters (16), insbesondere einer Single-Fibre, in Verbindung steht, wobei ggf. zwischen dem Ende (19) des Lichtleiters (16) und dem optischen Element (13, 14) ein Anregungsfilter (20) vorliegt.

7. Sensorelement nach Anspruch 6, dadurch gekennzeichnet, daß das Verhältnis der Brechungsindices von Kern (17) und Mantel (18) des Lichtleiters (16) sich nur geringfügig vom Verhältnis der Brechungsindices von Indikatorschicht (8) und Probe unterscheidet.

8. Sensorelement nach einem der Ansprüche 3 bis 5, dadurch gekennzeichnet, daß im Bereich der Gitterstruktur (14) eine lichtemittierende Quelle (21) vorliegt, wobei ggf. zwischen Gitterstruktur (14) und lichtemittierender Quelle (21) ein Anregungsfilter (20) vorliegt.

9. Sensorelement nach einem der Ansprüche 1 bis 8, dadurch gekennzeichnet, daß die fotoempfindlichen Elemente (3) von einer Filterschicht (5) insbesondere einem Interferenzfilter, bedeckt sind.

10. Sensorelement nach einem der Ansprüche 1 bis 9, dadurch gekennzeichnet, daß sich zwischen den fotoempfindlichen Elementen (3) und der Indikatorschicht (8) zusätzlich eine transparente Schicht, d.h. ein Channel Plate, (6) befindet, deren Akzeptanzwinkel den Transport von Anregungsstrahlung (11) zu den fotoempfindlichen Elementen (3) verhindert.

11. Sensorelement nach Anspruch 10, dadurch gekennzeichnet, daß in einzelnen, bestimmten fotoempfindlichen Elementen (3) zugeordneten Bereichen (a, b) der Indikatorschicht (8) unterschiedliche Indikatorsubstanzen (9, 9') vorliegen.

12. Sensorelement nach einem der Ansprüche 1 bis 11, dadurch gekennzeichnet, daß die Indikatorschicht (8) in an sich bekannter Weise auf der der Probe zugewandten Seite eine Deckschicht (10) aufweist.

13. Sensorelement nach einem der Ansprüche 1 bis 12, dadurch gekennzeichnet, daß auf der Trägerschicht (1) zusätzlich elektronische Schaltkreise mitintegriert sind, welche zur Verstärkung der elektrischen Signale der fotoempfindlichen Elemente (3) und/oder zur Regelung der Helligkeit der von den lichtemittierenden Quellen (21) erzeugten Strahlung dienen.

14. Sensorelement nach Anspruch 13, dadurch gekennzeichnet, daß auf der Trägerschicht (1) hoch intergrierte, elektronische Schaltkreise vorliegen, welche Aufgaben der Signalauswertung übernehmen.

## Claims

1. Sensing element for determining material concentrations in gaseous and liquid samples with a carrier layer and an indicating layer with at least one indicating substance, at least one optical characteristic of the indicating substance varying by interaction with the material under test in accordance with its concentration, characterised in that at least one photo-responsive element (3) and its electric contact arrangement are present in a planar layout on the carrier layer (1), that the indicating layer (8) which contains the indicating substance (9, 9') takes the form of a wave guide for the exciting radiation (11), the exciting radiation being capable of being coupled into the indicating layer (8) by means of an optical element (13, 14), and that the indicating substance (9, 9') excited by the exciting radiation (11) is in optical contact with the or each photo-responsive element (3).

2. Sensing element according to claim 1 characterised in that the optical element is a coupling-in prism which is mounted on the indicating layer (8) which is formed as a wave guide (Fig 2).

3. Sensing element according to claim 1 characterised in that the optical element is a grating structure, i.e., a grating coupler (14) which is preferably mounted on that side (15) of the indicating layer (8), formed as a wave guide, which faces away the sample.

4. Sensing element according to claim 3 characterised in that the photo-responsive element (3) is in the form of an annular diode and that the grating coupler (14) is provided on the indicating layer (8) in the neighbourhood of the inner annular surface of the diode (Fig 4).

5. Sensing element according to claim 3 characterised in that at least two oppositely disposed photodiodes (27) are secured in the neighbourhood of the grating coupler (14) as photo-responsive elements (3).

6. Sensing element according to one of claims 2 to 5 characterised in that the optical element (13, 14) is in communication at least indirectly with the end (19) of a light guide (16), in particular a single fibre, an excitation filter (20) being present if necessary between the end of the light guide (16) and the optical element (13, 14).

7. Sensing element according to claim 6 characterised in that the ratio between the refractive indices of the core (17) and the outer mantle (18) of the light guide (16) differs only minimally from the ratio of the refractive indices of the indicating layer (8) and the sample.

8. Sensing element according to one of claims 3 to 5 characterised in that a light-emitting source (21) is present in the neighbourhood of the grating coupler (14), an excitation filter (20) being present if necessary between the grating coupler (14) and the light-emitting source (21).

9. Sensing element according to one of claims 1 to 8 characterised in that the photo-responsive element (3) is covered by a filter layer (5), in particular an interference filter.

10. Sensing element according to one of claims 1 to 9 characterised in that an additional transparent layer, i.e., a channel plate (6) is present between the photoresponsive element (3) and the indicating layer (8), the acceptance angle of the channel plate preventing the transmission of exciting radiation (11) to the photoresponsive element (3).

11. Sensing element according to claim 10 characterised in that different indicating substances (9, 9') are present in individual regions (a, b) of the indicating layer (8) associated with predetermined photo-responsive elements (3).

12. Sensing element according to one of claims 1 to 11 characterised in that the indicating layer (8) has a covering layer on the side facing the sample, in a manner known in itself.

13. Sensing element according to one of claims 1 to 12 characterised in that additional electronic circuits are integrated in the carrier layer (1) and serve for amplifying the electric signals from the photo-responsive element (3) and/or for regulating the brightness of the radiation produced by the light-emitting source (21).

14. Sensing element according to claim 13, characterised in that highly integrated electronic circuits are present on the carrier layer (1) and are responsible for evaluating the signals.

## Revendications

1. Capteur pour la détermination des concentrations en matière dans des échantillons sous forme gazeuse et liquide, avec une couche support, ainsi qu'une couche d'indicateur ayant au moins une substance d'indication, avec au moins une propriété optique de la substance d'indication qui se modifie lors de l'interaction avec la matière à mesurer et en fonction de sa concentration, caractérisé en ce qu'au moins un élément photosensible (3) et son contact électrique sont disposés en une disposition de type planar, sur la couche support (1), que la couche d'indicateur (8) qui contient la substance d'indicateur (9, 9') représente un guide de lumière pour le rayonnement d'excitation (11), le rayonnement d'excitation (11) étant à cette occasion couplable dans la couche d'indicateur (8), au moyen d'un élément optique (13, 14), de même que la substance d'indicateur (9, 9') qui est excitée par le rayonnement d'excitation (11) est en contact optique avec le, respectivement les élément(s) photo-sensible(s) (3).

2. Capteur selon la revendication 1, caractérisé en ce que l'élément optique est un prisme de couplage (13), qui est appliqué sur la couche d'indicateur (8) conformée en guide de lumière (figure 2).

3. Capteur selon le revendication 1, caractérisé en ce que l'élément optique est une structure en grille, c'est à dire un Grating Coupler (14), qui est advantageusement appliquée sur la couche d'indicateur (8) qui est conformée en guide de lumière, du côté (15) qui est opposé à l'échantillon.

4. Capteur selon la revendication 3, caractérisé en ce que l'élément (3) photo-sensible est configuré en une diode en forme de couronne, de même que la structure en grille (14) est prévue dans la zone de la surface circulaire intérieure de la diode, sur la couche d'indicateur (8) (figure 4).

5. Capteur selon la revendication 3, caractérisé en ce qu'au moins deux photo-diodes (27), se faisant face dans la zone de la structure en diode (14), sont fixées, comme éléments photo-sensibles (3).

6. Capteur selon une des revendications 2 à 5, caractérisé en ce que l'élément optique (13, 14) est relié au moins indirectement avec l'extrémité d'un guide de lumière (16), en particulier une mono-fibre, un filtre d'excitation (20) existant, le cas échéant, entre l'extrémité (19) du guide de lumière (16) et l'élément optique (13, 14).

7. Capteur selon la revendication 6, caractérisé en ce que le rapport des indices de réfraction du noyau (17) et de l'enveloppe (18) du guide de lumière (16) ne se distinguent que de manière insignifiante du rapport de l'indice de réfraction de la couche d'indicateur (8) et de l'échantillon.

8. Capteur selon une des revendications 3 à 5, caractérisé en ce qu'il y a une source émettrice de lumière (21) dans la zone de la structure en grille (14), un filtre d'excitation (20) existant, le cas échéant, entre la structure en grille (14) et la source émettrice de lumière (21).

9. Capteur selon une des revendications 1 à 8, caractérisé en ce que les éléments photo-sensibles (3) sont recouverts d'une couche filtrante (5), en particulier d'un filtre d'interférences.

10. Capteur selon une des revendications 1 à 9, caractérisé en ce qu'une couche transparente, c'est à dire une Channel plate (6) se trouve située supplémentairement entre les éléments photo-sensibles (3) et la couche d'indicateur (8), dont l'angle d'acceptance empêche le transport du rayonnement d'excitation (11) vers les éléments photo-sensibles (3).

11. Capteur selon la revendication 10, caractérisé en ce que différentes substances d'indicateur (9, 9') se trouvent dans des zones (a, b) individuelles de la couche d'indicateur qui sont affectées à certains éléments photosensibles (3).

12. Capteur selon une des revendications 1 à 11, caractérisé en ce que la couche d'indicateur (8) possède de manière connue une couche de couverture (10), sur le côté qui est tourné vers l'échantillon.

13. Capteur selon une des revendications 1 à 12, caractérisé en ce que des circuits de branchement électroniques sont supplémentairement intégrés sur la couche support (1), servant à l'amplification des signaux électriques des éléments photo-sensibles (3) et/ou à la régulation de la brillance du rayonnement produit par les sources émettrices de lumière (21).

14. Capteur selon la revendication 13, caractérisé en ce que des circuits de branchement électroniques à haute intégration se trouvent sur la couche support (1), dont le but est de prendre en charge l'exploitation des signaux.

_Fig. 1_

_Fig. 2_

_Fig. 3_

*Fig. 4*

*Fig. 7*

_Fig. 5_

_Fig. 6_